# DEMANDE DE BREVET EUROPEEN

(11) **EP 1 229 695 A1**
(43) Date de publication de la demande: **07.08.2002**
(21) Numéro de dépôt: 02290268.8
(22) Date de dépôt: 05.02.2002
(51) Int. Cl.: H04L 12/58

(54) **Procédé de lecture de courriers électroniques**

(30) Priorité: 06.02.2001 FR 0101564
(71) Demandeur: SAGEM SA, 75015 Paris (FR)
(72) Inventeur: Vermande, Michel, 95770 Montreuil sur Epte (FR)
(74) Mandataire: Bloch, Gérard

(57) **Abrégé**

Il s'agit de courriers électroniques reçus dans une boîte aux lettres (32), d'un terminal destinataire (1), accessible à travers un réseau de transmission de données (30) et reliée à un serveur (33) de traduction des courriers électroniques. Un champ de service (MIME) des courriers spécifie un format d'au moins un champ de données utiles. Selon le procédé, on transfère par le réseau (30), de la boîte aux lettres (32) au terminal (1), les champs de service (MIME), dans le terminal (1), on détermine la compatibilité entre les formats spécifiés dans les champs de service, des champs de données utiles et des capacités de traitement du terminal (1), et en cas d'incompatibilité, le terminal (1) commande un renvoi des courriers vers le serveur de traduction (33).

## Description

La présente invention concerne la réception de courriers électroniques par un terminal relié à un réseau de transmission de données comme par exemple l'Internet.

Les courriers électroniques échangés à travers l'Internet sont conformes à un format spécifié permettant leur lecture par tout ordinateur de l'Internet. Un message de courrier électronique comporte un champ d'en-tête, comprenant des signaux de service spécifiant le type de contenu du reste du message, un champ de texte et éventuellement un champ de pièce jointe.

Lorsque le message est reçu par un terminal à capacité de traitement limitée, par exemple un téléphone mobile, celui-ci ne dispose pas toujours des logiciels nécessaires à sa lecture. En effet, le texte peut être codé par des mots de code de caractères particuliers et alors le terminal ne dispose pas du logiciel de décodage fournissant l'image associée à chaque mot de code.

Par ailleurs, une pièce jointe peut avoir un format quelconque, par exemple un format par pixels avec compression dans le cas d'une image, qui peut aussi ne pas être prévu dans le terminal récepteur.

De façon classique, un message de courrier électronique est reçu dans une boîte aux lettres (BAL) d'un fournisseur de service d'accès à l'Internet et le terminal relève cycliquement sa BAL. Si le courrier retransmis depuis la BAL est illisible, le terminal le renvoie à un serveur de traduction, en spécifiant les formats qu'il peut traiter, et le serveur retourne le courrier sous forme lisible.

Une telle exploitation nécessite de nombreux échanges de courriers, qui représentent des coûts de communication et contribuent à la saturation du réseau.

La présente invention vise à simplifier la lecture des courriers électroniques.

A cet effet, l'invention concerne un procédé de lecture de courriers électroniques reçus dans une boîte aux lettres, d'un terminal destinataire, accessible à travers un réseau de transmission de données et reliée à un serveur de traduction des courriers électroniques, ceux-ci comportant un champ de service spécifiant un format d'au moins un champ de données utiles, procédé caractérisé par le fait que
- on transfère par le réseau, de la boîte aux lettres au terminal, les champs de service des courriers reçus,
- dans le terminal, on détermine la compatibilité entre les formats, spécifiés dans les champs de service, des champs de données utiles et des capacités de traitement du terminal, et
- en cas d'incompatibilité, le terminal commande un renvoi des courriers vers le serveur de traduction, les courriers étant associés à des informations spécifiant des destinataires finals des courriers traduits.

Ainsi, le champ de données utiles est toujours transmis à bon escient, soit au terminal, s'il peut le lire, soit au serveur de traduction qui le réexpédie au terminal ou à un autre destinataire spécifié par celui-ci. Ce dernier cas se produit par exemple lorsque le terminal détecte que le format du message ne peut être traduit en un format compatible avec ses capacités de traitement logique ou encore qu'il ne dispose pas suffisamment de mémoire par rapport au format des données. Le mot format désigne ici tout aussi bien la forme informatique de présentation des données utiles que leur taille. On notera par ailleurs que la spécification de l'autre destinataire peut être explicite, et donc variable avec chaque message, ou bien implicite et fonction de l'identité ou adresse du terminal considéré, qui est dans le champ de service.

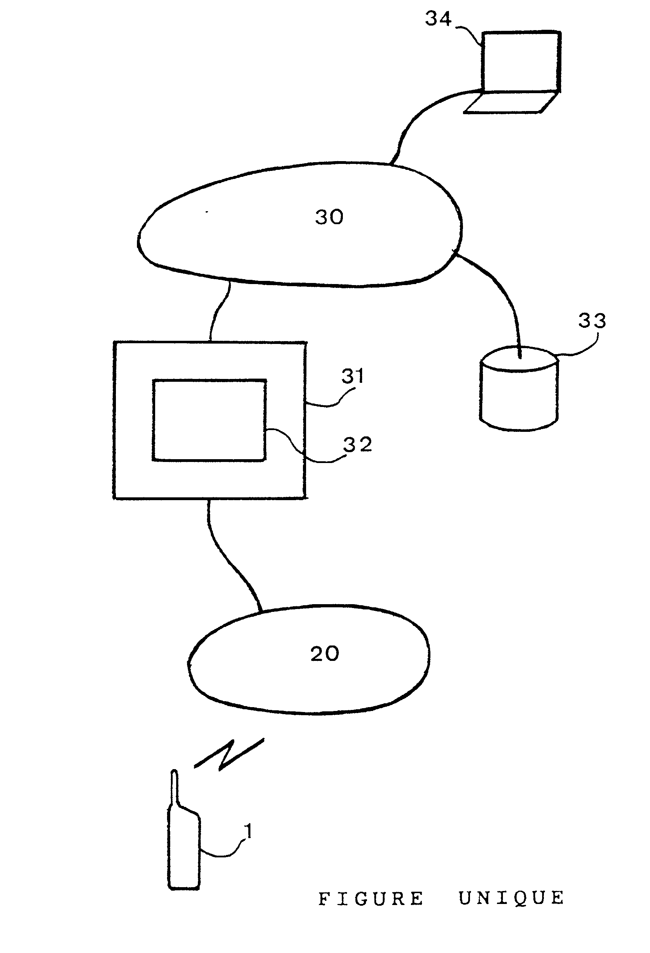

L'invention sera mieux comprise à l'aide de la description suivante d'un mode préféré de mise en oeuvre du procédé de l'invention, en référence à la figure unique annexée qui représente un réseau de transmission de données auquel sont reliés des équipements pour la mise en oeuvre du procédé de l'invention.

Sur la figure, la référence 30 désigne un réseau de transmission de données et précisément ici le réseau de l'Internet. Un terminal 1 de traitement de données dispose d'une boîte aux lettres 32 chez un fournisseur 31 de service d'accès à l'Internet 30. Dans cet exemple, le terminal 1 est un terminal d'un réseau de radiotéléphonie 20, ici le réseau cellulaire GSM, qui lui permet de se relier au fournisseur de service d'accès 31.

Au réseau Internet 30 sont reliés un ordinateur 34 permettant d'échanger des courriers électroniques et un serveur 33 de conversion ou traduction de courriers électroniques.

On rappellera qu'un courrier électronique comporte un champ de service, ou d'en-tête, appelé MIME, un champ de données utiles de texte, au format de codage informatique de l'Internet, et éventuellement un champ de données utiles de pièce jointe dans un format de codage quelconque. Le champ de pièce jointe est encapsulé dans le message de courrier électronique et est transporté dans l'Internet 30 sans être analysé. Le champ de service MIME spécifie les adresses d'émetteur et de destinataire du courrier et indique la position, dans le message, du champ de texte et, le cas échéant, celle de la pièce jointe et le format informatique ou type de codage qui a été utilisé pour en représenter les données. Un format " TIF " indique par exemple qu'il s'agit d'une image, codée par pixels.

Le format de codage du champ de texte de courrier électronique est de même spécifié dans le champ MIME. En effet, il existe un grand nombre d'alphabets et le terminal récepteur doit être informé du type de code à utiliser pour lire correctement chaque courrier reçu.

Le procédé de lecture d'un courrier électronique reçu dans la boîte aux lettres 32 va maintenant être expliqué.

Le terminal 1 effectue cycliquement une scrutation de l'état de remplissage de sa boîte aux lettres 32 pour déterminer si un nouveau message de courrier électronique ne serait pas arrivé depuis la dernière scrutation qui n'aurait donc pas été traité.

En variante, la boîte aux lettres 32, en fait le fournisseur de service d'accès 31, détecte l'arrivée de chaque courrier et appelle le terminal 1 pour en recevoir des instructions d'aiguillage du courrier vers le terminal 1 ou vers le serveur de traduction 33, comme expliqué ci-après.

Dans un cas comme dans l'autre, on transfère, par le réseau GSM 20, de la boîte aux lettres 32 au terminal 1, le champ de service MIME du courrier reçu, à l'exclusion du ou des champs de données utiles de texte et pièce jointe.

De préférence, comme ici, on utilise à cet effet le service de messages courts SMS, pour limiter le coût de communication.

Ce transfert est commandé par exemple par le terminal 1. Dans le cas de la variante avec appel par la boîte aux lettres 32, il peut être prévu que celle-ci envoie automatiquement le champ de service MIME au terminal 1, à titre à la fois d'avertissement de l'arrivée d'un courrier et de descripteur du format de son contenu. Comme déjà indiqué, le mot " format " désigne à la fois le format informatique de codage et la taille des champs.

Dans le terminal 1, le champ MIME est lu pour déterminer la compatibilité entre le ou les formats du ou des champs de données utiles et les capacités de traitement du terminal 1. Le champ MIME indiquant en outre la ou les positions du ou des champs de données utiles dans le message de courrier électronique, ces informations indiquent donc la taille ou le format des champs de données utiles. Les capacités de traitement ci-dessus concernent donc les types de codes disponibles dans le terminal 1 pour lire le courrier et/ou la taille mémoire disponible.

En cas de compatibilité, le terminal 1 commande au fournisseur de service d'accès 31 d'envoyer le courrier ou le reste de courrier, c'est-à-dire au moins le ou les champs de données utiles, pour une relève de la boîte aux lettres 32.

En cas d'incompatibilité, le terminal 1 commande au fournisseur de service d'accès 31 de renvoyer le courrier vers le serveur de traduction 33, le courrier étant associé logiquement à une information spécifiant un destinataire final du courrier traduit, comme expliqué ci-après.

Le destinataire final peut être le terminal 1 ou un autre destinataire, comme l'ordinateur 34. En outre, le destinataire final peut être spécifié de façon définitive ou peut varier avec chaque courrier.

Par exemple, le serveur de traduction 33 peut systématiquement renvoyer le courrier traduit à l'adresse de destinataire (d'origine) du champ MIME, c'est-à-dire le renvoyer à la boîte aux lettres 32. Il est donc alors inutile de spécifier explicitement, en plus du message de courrier, l'adresse de renvoi.

Le terminal 1 peut, en variante, associer, au courrier renvoyé au serveur de traduction 33, l'adresse du destinataire final 34.

Encore en variante, le serveur de traduction 33 comporte une table d'une pluralité d'adresses de destinataire final 34 spécifiées par le terminal 1 dans une phase de mise en service ou initialisation, et le serveur 33 sélectionne à chaque fois l'une de celle-ci en fonction du format du courrier traduit, c'est-à-dire des capacités spécifiées dans la table, des destinataires potentiels 34, en termes de volume mémoire et/ou type de traitement.

En particulier, le terminal 1 peut appartenir à la table ci-dessus et être prioritaire pour recevoir le courrier traduit.

Le serveur de traduction 33 compare alors les formats informatiques des courriers renvoyés sur lui et les formats informatiques de la table associés aux adresses de destinataire 34 pour sélectionner les types ou formats des traductions à effectuer et les destinataires des courriers traduits.

Le nouveau format ou type de codage du courrier traduit peut toutefois être spécifié au serveur de traduction 33 par une commande associée au courrier renvoyé, de même que l'adresse de destinataire final.

## Revendications

1. Procédé de lecture de courriers électroniques reçus dans une boîte aux lettres (32), d'un terminal destinataire (1), accessible à travers un réseau de transmission de données (30) et reliée à un serveur (33) de traduction des courriers électroniques, ceux-ci comportant un champ de service (MIME) spécifiant un format d'au moins un champ de données utiles, procédé **caractérisé par le fait que**
- on transfère par le réseau (30), de la boîte aux lettres (32) au terminal (1), les champs de service (MIME) des courriers reçus,
- dans le terminal (1), on détermine la compatibilité entre les formats spécifiés dans les champs de service, des champs de données utiles et des capacités de traitement du terminal (1), et
- en cas d'incompatibilité, le terminal (1) commande un renvoi des courriers vers le serveur de traduction (33), les courriers étant associés à des informations spécifiant des destinataires finals (34) des courriers traduits.

2. Procédé selon la revendication 1, dans lequel le terminal (1) spécifie au serveur (33) un format de codage du courrier traduit.

3. Procédé selon l'une des revendications 1 et 2, dans lequel le terminal (1) spécifie au serveur (33), pour chaque courrier, une adresse de destinataire final (34).

4. Procédé selon l'une des revendications 1 et 2, dans lequel le terminal (1) spécifie au serveur (33), dans une phase de mise en service, une pluralité d'adresses de destinataire (34) associées à des formats informatiques de codage des courriers traduits, que le serveur (33) compare ensuite à des formats informatiques des courriers renvoyés pour sélectionner les formats de traduction des courriers et leurs destinataires.

5. Procédé selon l'une des revendications 1 à 4, dans lequel le transfert du champ de service (MIME) s'effectue par un service de messages courts (SMS).

6. Procédé selon l'une des revendications 1 à 5, dans lequel la boîte aux lettres (32) détecte l'arrivée d'un courrier et appelle le terminal (1) pour en recevoir des instructions d'aiguillage du courrier vers le terminal (1) ou vers le serveur (33).
